# FASCICULE DE BREVET EUROPEEN

(11) **EP 0 765 901 B1**
(45) Date de publication et mention de la délivrance du brevet: **25.02.2004**
(21) Numéro de dépôt: 96202590.4
(22) Date de dépôt: 17.09.1996
(51) Int. Cl.: C08J 9/14, C08J 9/00

(54) **Prémélanges pour la préparation de mousses de polyuréthane ou de polyisocyanurate**
Vormischungen für die Herstellung von Polyurethan- oder Polyisocyanuratschaumstoffen
Premixes for the preparation of polyurethane of polyisocyanurate foams

(30) Priorité: 26.09.1995 BE 9500794
(43) Date de publication de la demande: 02.04.1997
(73) Titulaire: SOLVAY (Société Anonyme), 1050 Bruxelles (BE)
(72) Inventeur: Barthelemy, Pierre, 1315 Pietrebais (BE); Leroy, Annie, 6800 Libramont (BE)
(74) Mandataire: Jacques, Philippe

(56) Documents cités:
- EP-A- 0 405 615
- EP-A- 0 503 441
- EP-A- 0 590 709
- WO-A-93/00379
- US-A- 5 137 929

## Description

La présente invention se rapporte à des prémélanges destinés à la préparation de mousses de polyuréthane ou de polyisocyanurate, à un procédé de fabrication de telles mousses et aux mousses obtenues.

Il est bien connu que les mousses de polyuréthane ou de polyisocyanurate peuvent être préparées en faisant réagir un isocyanate avec une quantité appropriée d'un polyol ou d'un mélange de polyols, en présence d'un agent gonflant constitué d'un hydrofluoroalcane liquide volatil, lequel est vaporisé par la chaleur libérée par la réaction entre l'isocyanate et le polyol.

Il est toutefois bien connu que les hydrofluoroalcanes sont généralement susceptibles d'être partiellement dégradés au contact de certains polyols ou de certains catalyseurs, en particulier au contact de catalyseurs de trimérisation classiquement mis en oeuvre dans les formulations de type polyisocyanurate. Ce problème impose généralement d'ajouter aux hydrofluoroalcanes des stabilisants afin d'inhiber leur dégradation durant l'étape de fabrication de la mousse, ainsi qu'ultérieurement, au sein de la mousse de polyuréthane ou de polyisocyanurate.

Il est par ailleurs de pratique courante dans le domaine des mousses de polyuréthane ou de polyisocyanurate de préparer des prémélanges de certains composants, qui seront utilisés ultérieurement pour préparer la mousse. Habituellement, les quantités appropriées de polyol, d'agent gonflant et d'autres additifs éventuels sont mélangées pour former un prémélange. Ce prémélange et la quantité adéquate d'isocyanate sont généralement fournis dans deux réservoirs distincts, l'utilisateur final n'ayant plus alors qu'à mélanger les contenus des deux réservoirs pour fabriquer la mousse. D'autre part, dans les grosses unités de production de mousses, on stocke parfois le mélange contenant le polyol et l'agent gonflant. Ce mélange liquide possède une viscosité plus faible que celle du polyol pur et est dès lors plus facile à pomper et à doser vers l'aire de fabrication de la mousse. A ce stade également, les hydrofluoroalcanes sont généralement susceptibles d'être partiellement dégradés, ce qui impose généralement l'utilisation de stabilisants afin d'inhiber leur dégradation en cours de stockage.

Le brevet US 5,137,929 et les demandes EP-A-590 709 et WO-A-93/00379 décrivent la stabilisation du 1,1-dichloro-1-fluoro éthane (HCFC-141b). La demande EP-A-503141 décrit la stabilisation du 1,1-dichloro-2,2,2-trifluoroéthane (HCFC-123).

En outre, on considère actuellement que, pour satisfaire aux réglementations de protection de l'environnement, il est nécessaire de trouver des agents gonflants totalement exempts de chlore, présentant de la sorte un potentiel de destruction de l'ozone nul. Dans les demandes EP-A-381986 et EP-405615, on a notamment proposé d'utiliser dans ce but certains hydrofluoroalcanes en C3-C5.

Un but de la présente invention est d'identifier, parmi les nombreux hydrofluoroalcanes potentiellement utilisables comme agents gonflants qui satisfont aux exigences de respect de l'environnement, ceux pouvant être efficacement stabilisés, de préférence à la fois dans les prémélanges, durant l'étape de fabrication de la mousse et ultérieurement au sein des mousses de polyuréthane ou de polyisocyanurate.

La présente invention a également pour objet de procurer des prémélanges destinés à la fabrication de mousses de polyuréthane ou de polyisocyanurate, renfermant un hydrofluoroalcane de stabilité améliorée à l'encontre de la dégradation induite par les autres constituants des prémélanges.

La présente invention a également pour objet un procédé de fabrication de mousses de polyuréthane ou de polyisocyanurate renfermant un hydrofluoroalcane dont la décomposition est efficacement inhibée.

L'invention concerne dès lors des prémélanges destinés à la préparation de mousses de polyuréthane ou de polyisocyanurate, comprenant au moins un polyol; au moins un hydrofluoroalcane répondant à la formule générale

CF₃-CR¹R²-CF₂-R³

où R¹ et R² représentent, indépendamment l'un de l'autre, un atome d'hydrogène ou un groupement alkyle en C1-C3, éventuellement fluoré, et où R³ représente un atome d'hydrogène ou un groupement méthyle; et au moins un stabilisant choisi parmi les nitroalcanes, les dicétones, les sels de métaux alcalino-terreux et les composés bromés.

Par polyuréthane, on entend les polymères issus essentiellement de la réaction de polyols et d'isocyanates. Ces polymères sont obtenus typiquement au départ de formulations présentant un indice d'isocyanate de 100 à 130.

Par polyisocyanurate, on entend les polymères issus de la réaction de polyols et d'isocyanates qui contiennent, outre des fonctions uréthanes, d'autres types de fonctions, en particulier des cycles triisocyanuriques formés par trimérisation des isocyanates. Ces polymères, régulièrement aussi dénommés polyuréthanes modifiés, sont obtenus typiquement au départ de formulations présentant un indice d'isocyanate de 130 à 450.

Aux fins de la présente invention, on entend par prémélange toute composition comprenant au moins un polyol et au moins un agent gonflant.

Aux fins de la présente invention, on entend par polyol tout composé renfermant au moins deux groupements fonctionnels réagissant avec les isocyanates. Ces groupements fonctionnels contiennent au moins un atome d'hydrogène actif, tel que défini par la réaction de Zerewittinoff. L'atome d'hydrogène actif est généralement un atome d'hydrogène lié à un atome d'oxygène, d'azote ou de soufre. Tous les polyols classiquement utilisés pour préparer des mousses de polyuréthane peuvent être mis en oeuvre dans les prémélange selon l'invention. On peut citer notamment les polyether-polyols et les polyester-polyols.

Des hydrofluoroalcanes préférés dans les prémélanges selon l'invention sont le 1,1,1,3,3-pentafluoropropane, le 1,1,1,3,3-pentaftuorobutane et le 2-méthyl-1,1,1,3,3-pentafluoropropane. Le 1,1,1,3,3-pentafluoropropane et le 1,1,1,3,3-pentafluorobutane sont particulièrement préférés.

Des nitroalcanes préférés sont les nitroalcanes en C1-C6, tels que le nitrométhane, le nitroéthane, le 1-nitropropane, le 2-nitropropane, le 1-nitrobutane, le 1-nitropentane et le 1-nitrohexane. Le nitrométhane et le 1-nitropentane sont particulièrement préférés, en particulier dans les prémélanges adaptés à la préparation de mousses de polyisocyanurate.

Des dicétones préférées sont les dicétones aliphatiques en C5-C10 et les benzoquinones éventuellement substituées par au moins un groupe alkyle en C1-C10. Les dicétones préférées peuvent être halogénées. Les dicétones aliphatiques préférées sont les β-dicétones, telles l'acétylacétone. Parmi les benzoquinones, la 1,4-benzoquinone, la tétrahydro-1,4-benzoquinone, la 2-chloro-1,4-benzoquinone, et la 1,4-benzoquinone substituée par un ou plusieurs groupes alkyles en C1-C5 sont préférées. La 1,4-benzoquinone, est particulièrement préférée.

Des sels de métaux alcalino-terreux préférés sont les halogénures et les nitrates de calcium ou de magnésium. Les chlorures sont particulièrement préférés.

Des composés bromés préférés sont les bromoalcanes et les bromoalcools.

Par bromoalcane, on entend désigner tout composé comportant un groupement aliphatique saturé, substitué par au moins un atome de brome. Les bromoalcanes préférés sont les bromoalcanes en C1-C10. A titre d'exemples, on peut citer le bromométhane, le dibromométhane, le tétrabromométhane, le 1,2-dibromoéthane, le 1,5-dibromopentane, le 2-méthyl-2-bromopropane et le 1,4-(dibromométhyl)-benzène. Les bromoalcanes en C1-C6 sont particulièrement préférés.

Par bromoalcool, on entend désigner tout composé dont la structure moléculaire comprend au moins un atome de brome et au moins un groupement hydroxyle. La présence d'autres groupements fonctionnels au sein de ces composés n'est pas exclue. Des bromoalcools préférés sont les bromoalcools en C3-C20. A titre d'exemples, on peut citer le tribromonéopentyl alcool, le 2,3-dibromobut-2-ène-1,4-diol, les polyols aromatiques bromés, tels que les dérivés bromés du bisphénol A, par exemple le polyol FOX-O-POL® VD280S de Shell, les polyéther-polyols bromés, par exemple ceux produits par addition d'épichlorhydrine sur le 2,3-dibromobut-2-ène-1,4-diol, commercialisés par Solvay sous la marque IXOL®, les polyester-polyols aromatiques bromés, tels que les tétrabromophtalates de di(hydroxyalkyle), commercialisés par Great Lakes Chemicals sous la marque PHT4-DIOL®.

Les stabilisants les plus particulièrement préférés dans les prémélanges selon l'invention sont les benzoquinones et les composés bromés.

Outre le polyol, l'hydrofluoroalcane et le stabilisant, les prémélanges selon l'invention peuvent en outre contenir divers additifs utilisés habituellement pour préparer des mousses de polyuréthane ou de polyuréthane modifié, tels que notamment de l'eau, des catalyseurs, des agents tensioactifs, des agents antioxydants, des agents retardateurs de flamme et/ou des pigments.

Comme catalyseur, on peut citer les composés favorisant la formation du lien uréthane -NH - CO - O-, par réaction entre un polyol et un isocyanate ou activant la réaction entre un isocyanate et l'eau, tels que des amines tertiaires et des composés organiques d'étain, de fer, de mercure ou de plomb.

Les prémélanges selon l'invention adaptés à la préparation de mousses de polyisocyanurate contiennent généralement un catalyseur de trimérisation, c'est-à-dire un composé catalysant la réaction de trimérisation des isocyanates en triisocyanurates. Comme catalyseurs de trimérisation, on peut citer les carboxylates de métaux alcalins, tel que l'octanoate de potassium, les carboxylates d'hydroxyalkylammonium et les triazines. Le plus souvent, ces catalyseurs sont utilisés en association avec des composés favorisant la formation du lien uréthane.

Les proportions optimales de polyol, d'hydrofluoroalcane, de stabilisant et d'additifs éventuels dans les prémélanges selon l'invention dépendent notamment de l'application, du type de mousse préparé, de la nature du polyol, de la nature de l'hydrofluoroalcane, de la nature du stabilisant et de la nature des additifs. Elles peuvent être déterminées facilement dans chaque cas particulier. En pratique, la quantité d'hydrofluoroalkane est généralement de 1 à 80 parts en poids pour 100 parts en poids de polyol. De préférence, elle est de 10 à 60 parts en poids pour 100 parts en poids de polyol. En général, la quantité de stabilisant utilisée est d'environ 0,05 à 25 parts en poids pour 100 parts en poids d'hydrofluoroalcane. De préférence, elle est d'environ 0,1 à 20 parts en poids pour 100 parts en poids d'hydrofluoroalcane. De manière particulièrement préférée, elle est de 0,5 à 15 parts en poids pour 100 parts en poids d'hydrofluoroalcane. Lorsque le stabilisant est un polyéther-polyol bromé ou un polyester-polyol bromé, il peut être mis en oeuvre en quantité plus élevée, en lieu et place d'une partie ou de la totalité du polyol non bromé du prémélange. Les quantités d'eau, de catalyseurs, d'agents tensioactifs, d'agents plastifiants et/ou d'agents retardateurs de flamme dans les prémélanges selon l'invention sont celles classiquement mises en oeuvre pour préparer des mousses de polyuréthane ou de polyisocyanurate.

Les prémélanges selon l'invention sont destinés à la fabrication de mousses de polyuréthane ou de mousses de polyisocyanurate par réaction avec un isocyanate. En particulier, d'excellents résultats ont été obtenus avec des prémélanges selon l'invention adaptés à la fabrication de mousses rigides de polyisocyanurate. Ces prémélanges se sont avérés particulièrement stables, ne donnant quasi pas lieu à une dégradation de l'hydrofluoroalcane malgré la présence en leur sein de catalyseurs de trimérisation induisant, en l'absence des stabilisants cités plus haut, une dégradation notable des hydrofluoroalcanes.

L'invention concerne également un procédé de fabrication de mousses de polyuréthane ou de polyisocyanurate dans lequel on fait réagir au moins un isocyanate avec au moins un polyol en présence d'un hydrofluoroalcane et d'un stabilisant, décrits ci-avant à propos des prémélanges selon l'invention.

Tous les isocyanates classiquement utilisés pour fabriquer de telles mousses peuvent être mis en oeuvre dans le procédé selon l'invention. A titre d'exemples, on peut citer des isocyanates aliphatiques, tels que le diisocyanate d'hexaméthylène et des isocyanates aromatiques, tels que le diisocyanate de tolylène ou le diisocyanate de diphénylméthane.

L'invention concerne également des mousses de polyuréthane ou de polyisocyanurate obtenues par mise en oeuvre d'un prémélange ou d'un procédé conformes à l'invention, tels que définis plus haut.

Les exemples ci-après illustrent l'invention de manière non limitative. Les exemples 1, 3, 7, 10 à 15, 17, 19 et 21 à 27 sont conformes à l'invention. Les exemples 2, 4, 5, 6, 8, 9, 16, 18 et 20, annotés (C), sont fournis à titre de comparaison.

Sauf mention explicite contraire, toutes les quantités des constituants mis en oeuvre dans les exemples sont exprimées en parts en poids pour 100 parts de polyol.

### Exemples 1 à 6

Six prémélanges pour la préparation de mousses de polyisocyanurate ont été préparés dans les proportions pondérales suivantes :
- 100 parts de polyéther-polyol sur base sucrose TERCAROL® RF33, commercialisé par Enichem
- 1 part d'eau
- 1 part d'agent tensioactif silicone TEGOSTAB® B 8404 de Goldschmidt
- 3 parts de N,N-diméthylcyclohexylamine
- 7 parts d'acétate de potassium KACECAT® KCA, commercialisé par Solvay Fluor und Derivate GmbH
- du 1,1,1,3,3-pentafluoropropane (HFC-245fa), du 1,1,1,3,3-pentafluorobutane (HFC-365mfc) ou du 1,1-dichloro-1-fluoroéthane (HCFC-141b), dans les proportions précisées au tableau I
- éventuellement 2 parts de nitrométhane, comme précisé au tableau I.

Ces prémélanges ont été conservés à une température constante de 70 °C pendant 2 mois, puis ont été analysés par chromatographie en phase gazeuse, afin de mesurer les quantités de produits insaturés formés par déshydrohalogénation de l'agent gonflant.

Les résultats sont présentés dans le tableau I ci-après. La comparaison des exemples 1 et 3 selon l'invention avec les exemples 2(C) et 4(C), montre que la dégradation du 1,1,1,3,3-pentanuorobutane et du 1,1,1,3,3-pentafluoropropane est partiellement inhibée par le nitrométhane, contrairement à ce qui est observé pour le 1,1-dichloro-1-fluoroéthane (exemples de comparaison 5(C) et 6(C)). Il en ressort qu'une inhibition de la dégradation est obtenue uniquement en la présence simultanée d'hydrofluoroalcanes et de stabilisants conformes à l'invention.

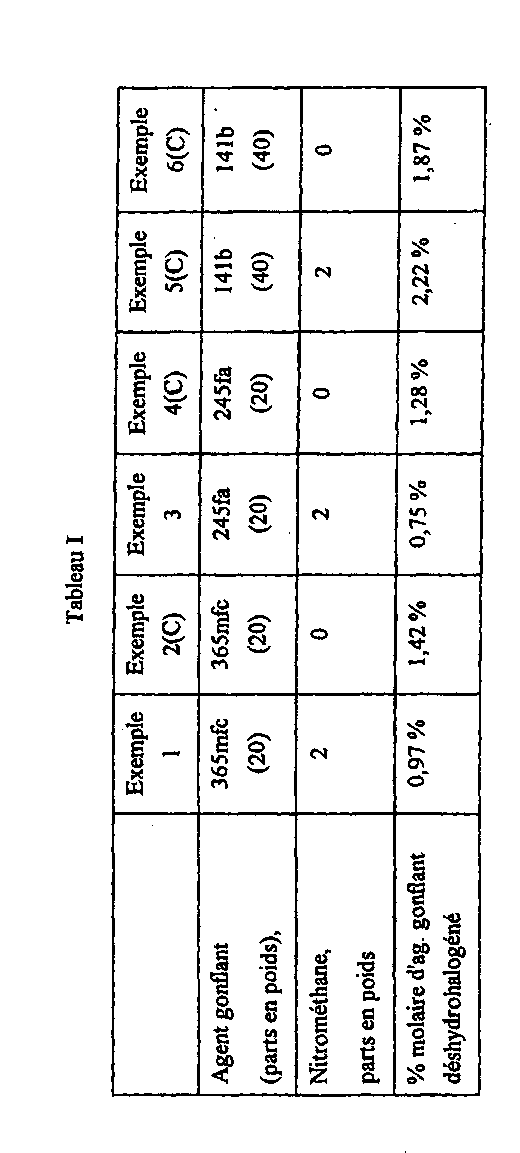

### Exemples 7 et 8(C)

Deux prémélanges pour la préparation de mousses de polyisocyanurate ont été préparés dans les proportions pondérales suivantes :
- 100 parts de polyéther polyol sur base sucrose TERCAROL® RF33, commercialisé par Enichem
- 1 part d'eau
- 1 part d'agent tensioactif silicone TEGOSTAB® B 8404 de Goldschmidt
- 3 parts de N,N-diméthylcyclohexylamine
- 7 parts de 2-éthylhexanoate de N-2-hydroxypropyltriméthylammonium DABCO® TMR, commercialisé par Air Products and Chemicals
- 20 parts de 1,1,1,3,3-pentafluorobutane (HFC-365mfc),
- éventuellement 1 part de 1,4-benzoquinone, comme précisé au tableau II.

Ces prémélanges ont été conservés à une température constante de 70 °C. Des échantillons ont été prélevés après différents temps de stockage dans ces conditions et analysés par chromatographie en phase gazeuse, afin de mesurer les quantités de produits insaturés formés par déshydrohalogénation de l'agent gonflant. Les résultats sont présentés dans le tableau IL Dans le prémélange mis en oeuvre, la 1,4-benzoquinone inhibe de manière notable la dégradation du HFC-365mfc.

**Tableau II**

| | Exemple 7 | Exemple 8(C) |
|---|---|---|
| 1,4-benzoquinone, parts poids | 1 | 0 |
| % molaire d'agent gonflant déshydrohalogéné | | |
| après 14 jours | 0,66 % | 1,07 % |
| après 1 mois | 1,07 % | 1,64 % |
| après 2 mois | 1,74 % | 2,57 % |

### Exemples 9-17

Dans l'exemple 9(C), une mousse de polyisocyanurate a été préparée par mélange à la main, au départ d'un diisocyanate de diphénylméthane polymérique DESMODUR® 44V20 commercialisé par BAYER et d'un prémélange de constitution suivante :
- 100 parts de polyéther polyol sur base sorbitol TERCAROL® RF55, commercialisé par Enichem
- 1 part d'eau
- 2 parts d'agent tensioactif silicone TEGOSTAB® B 8404 de Goldschmidt
- 3 parts de N,N-diméthylcyclohexylamine
- 7 parts d'acétate de potassium KACECAT® KCA, commercialisé par Solvay Fluor und Derivate GmbH
- 60 parts en poids de 1,1,1,3,3-pentafluorobutane (365mfc).

Dans un bol de mélange, on a introduit successivement le polyol, l'agent tensioactif, l'eau et l'agent gonflant puis, après une première agitation, les catalyseurs. On a ensuite ajouté l'isocyanate, à raison de 404,3 parts pour 100 parts de polyol, ce qui correspond à un index 300 (100 fois le rapport entre le nombre de fonctions isocyanate et le nombre de fonctions hydroxyle dans le milieu réactionnel). On a ensuite immédiatement mélangé intimement la composition obtenue pendant 25 secondes au moyen d'un agitateur de type multipale tournant à 1600 tours par minute, puis on l'a transvasée dans un moule à expansion libre où s'effectuent l'expansion et le mûrissage de la mousse.

A l'exemple 10, on a introduit dans le prémélange 0,3 parts en poids de nitrométhane (NM) pour 100 parts de polyol.

A l'exemple 11, on a introduit dans le prémélange 3 parts en poids de nitrométhane (NM) pour 100 parts de polyol.

A l'exemple 12, on a introduit dans le prémélange 3 parts en poids de 1-nitropentane (NP) pour 100 parts de polyol.

A l'exemple 13, on a introduit dans le prémélange 3 parts en poids de 1,4-benzoquinone (BQ) pour 100 parts de polyol.

A l'exemple 14, on a introduit dans le prémélange 3 parts en poids de chlorure de calcium pour 100 parts de polyol.

A l'exemple 15, on a introduit dans le prémélange 3 parts en poids de chlorure de magnésium pour 100 parts de polyol.

A l'exemple 16(C), on a utilisé du 1,1,1,3,3-pentafluoropropane (245fa) en lieu et place du 1,1,1,3,3-pentaftuorobutane, en l'absence de stabilisant.

A l'exemple 17, on a introduit, dans le prémélange de l'exemple 16, 3 parts en poids de nitrométhane (NM) pour 100 parts de polyol.

A l'exemple 18, on a introduit dans le prémélange de l'exemple 16, 0,6 part en poids d'acétylacétone (AAC) pour 100 parts de polyol.

Pour chaque mousse, on a enregistré le profil de réactivité et on a mesuré, par analyse chromatographique, la teneur en produits de déshydrohalogénation de l'hydrofluoroalcane au sein de la mousse, immédiatement après sa fabrication et après stockage dans différentes conditions. Les résultats sont rassemblés au tableau III. L'addition d'un stabilisant conforme à l'invention entraîne une inhibition substantielle de la dégradation subie par le HFC-365mfc ou par le HFC-245fa dans la mousse de polyisocyanurate testée.

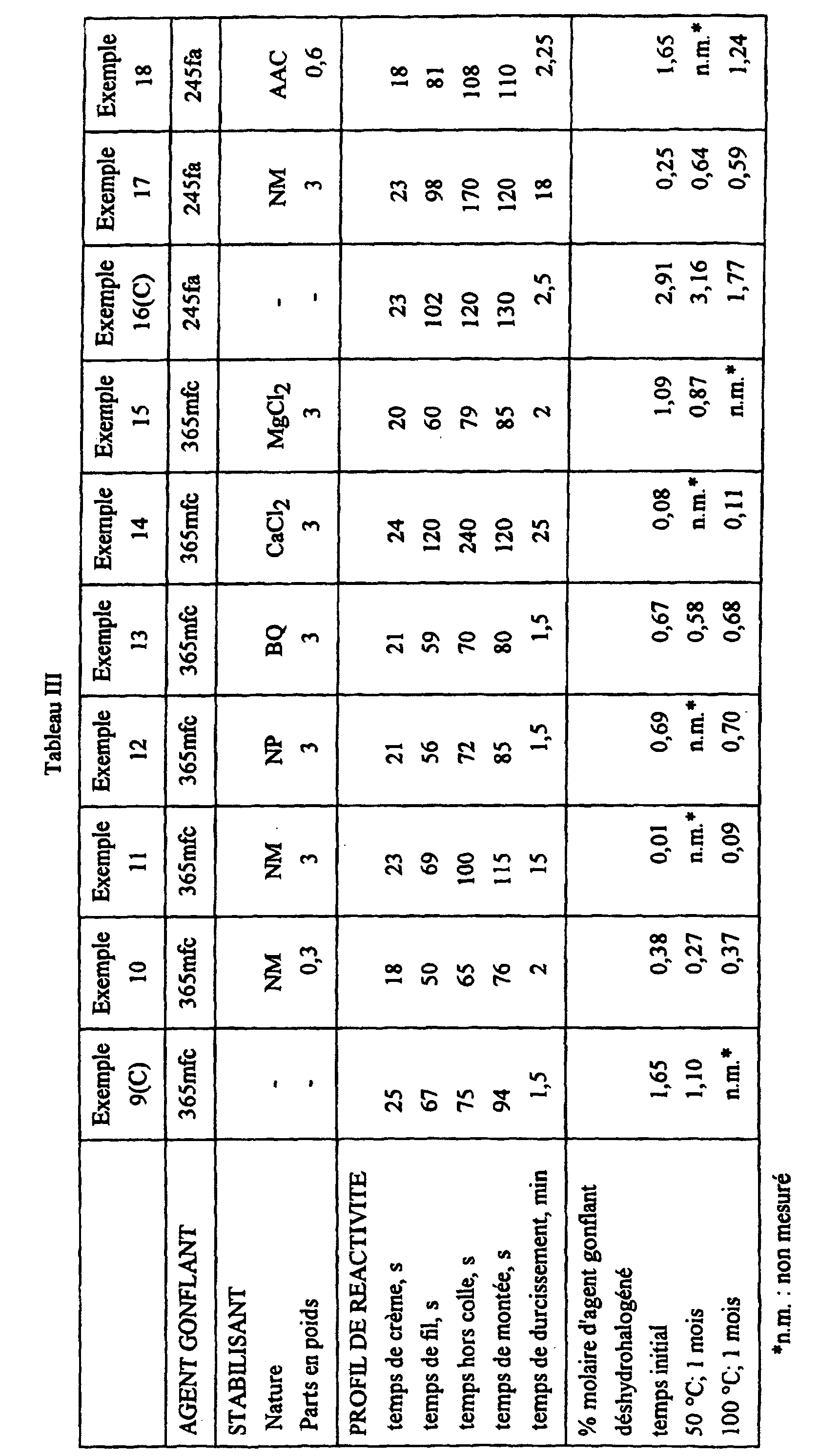

### Exemples 19-22

Les essais des exemples 9(C) et 11 ont été répétés en remplaçant l'acétate de potassium par une quantité identique d'hexahydro-1,3,5-tris[3-(N,N-diméthylamino)-propyl]- 1,3,5-triazine POLYCAT® 41, commercialisé par Air Products and Chemicals. Les résultats obtenus sont rassemblés au tableau IV.

Les essais des exemples 16(C) et 17 ont été répétés en remplaçant l'octanoate de potassium par une quantité identique de 2-éthylhexanoate de N-2-hydroxypropyltriméthylammonium DABCO® TMR, commercialisé par Air Products and Chemicals. Les résultats obtenus sont rassemblés au tableau IV. Une réduction notable de la dégradation de l'hydrofluoroalcane a été observée.

| Tableau IV | | | | |
|---|---|---|---|---|
| | Exemple 19(C) | Exemple 20 | Exemple 21(C) | Exemple 22 |
| AGENT GONFLANT | 365mfc | 365mfc | 245fa | 245fa |
| STABILISANT | | | | |
| Nature | - | NM | - | NM |
| Parts en poids | - | 3 | - | 3 |

| PROFIL DE REACTIVITE | | | | |
|---|---|---|---|---|
| temps de crème, s | 18 | 14 | 25 | 25 |
| temps de fil, s | 69 | 62 | 120 | 150 |
| temps hors colle, s | 90 | 95 | 176 | n.m. |
| temps de montée, s | 90 | 115 | 180 | n.m. |
| temps de durcissement, min | 3 | 16 | 3,5 | >15 |
| % molaire d'agent gonflant déshydrohalogéné | | | | |
| temps initial | 0,04 | 0,01 | 1,62 | 0,19 |
| 50 °C; 1 mois | 0,08 | n.m. | 1,57 | 0,64 |
| ∗n.m. : non mesuré | | | | |

### Exemples 23-26

Des mousses de polyisocyanurate (index d'isocyanate 300) ont été préparées par mélange à la main, au départ d'un diisocyanate de diphénylméthane polymérique DESMODUR® 44V20 de Bayer et de prémélanges contenant un polyol aminé sur base sucrose CARADOL® 585-8 de Shell et un polyéther-polyol bromé IXOL® B251 de Solvay. La constitution des prémélanges mis en oeuvre est donnée au tableau V, ainsi que les résultats obtenus. La dégradation subie par le HFC-365mfc dans ces compositions est quasi négligeable.

**Tableau V**

| | Exemple 23 | Exemple 24 | Exemple 25 | Exemple 26 |
|---|---|---|---|---|
| polyol aminé CARADOL®585-8 | 30 | 30 | 30 | 30 |
| polyéther-polyol bromé IXOL®B251 | 70 | 70 | 70 | 70 |
| trichloropropylphosphate | 20 | 20 | 20 | - |
| silicone TEGOSTAB® B 8404 | 3 | 3 | 3 | 3 |
| eau | - | - | - | 1 |
| N,N-diméthylbenzylamine | 2 | 2 | - | - |
| N,N-diméthylcyclohexylamine | - | - | 2 | 2 |
| acétate de potassium | - | 4,5 | 4,5 | 4,5 |
| DABCO® TMR2(1) | 4,5 | - | - | - |
| 1,1,1,3,3-pentafluorobutane | 50 | 50 | 50 | 50 |

| PROFIL DE REACTIVITE | | | | |
|---|---|---|---|---|
| temps de crème, s | 55 | 50 | 16 | 21 |
| temps de fil, s | 110 | 85 | 40 | 61 |
| temps hors colle, s | 145 | 100 | 50 | 85 |
| temps de montée, s | 165 | 115 | 55 | 85 |
| temps de durcissement, min | 4,5 | 3,5 | 2 | 3,5 |
| % molaire d'agent gonflant déshydrohalogéné | | | | |
| temps initial | 0,05 | 0,06 | 0,09 | 0,09 |
| 50 °C; 1 mois | 0,06 | 0,05 | 0,07 | 0,06 |

| | | | | |
|---|---|---|---|---|
| (1) : formiate de N-2-hydroxypropyltriméthylammonium, commercialisé par Air Products and Chemicals | | | | |

### Exemples 27-28

Des mousses de polyisocyanurate (index d'isocyanate 300) ont été préparées par mélange à la main, au départ d'un diisocyanate de diphénylméthane polymérique DESMODUR® 44V20 commercialisé par Bayer et de prémélanges à base de polyol aminé CARADOL® 585-8 de Shell et de polyéther-polyol sur base sorbitol TERCAROL® RF 55 de Enichem, contenant un bromoalcool ou un bromoalcane. La constitution des 2 prémélanges mis en oeuvre est donnée au tableau VI, ainsi que les résultats obtenus. La dégradation subie par le HFC-365mfc dans ces compositions est quasi négligeable.

**Tableau VI**

| | Exemple 27 | Exemple 28 |
|---|---|---|
| polyol aminé CARADOL® 585-8 | 30 | 30 |
| polyéther-polyol TERCAROL® RF 55 | 70 | 70 |
| trans-2,3-dibromobut-2-éne-1,4-diol | 10 | - |
| 2-méthyl-2-bromopropane | - | 11,1 |
| silicone TEGOSTAB® B 8404 | 3 | 3 |
| eau | 1 | 1 |
| N,N-diméthylcyclohexylamine | 2 | 2 |
| acétate de potassium | 4,5 | 4,5 |
| 1,1,1,3,3-pentafluorobutane | 50 | 50 |
| PROFIL DE REACTIVITE | | |
| temps de crème, s | 20 | 22 |
| temps de fil, s | 65 | 60 |
| temps hors colle, s | 95 | 84 |
| temps de montée, s | 100 | 95 |
| temps de durcissement, min | 3,5 | 2,5 |
| % molaire d'agent gonflant déshydrohalogéné | | |
| temps initial | 0,05 | 0,03 |
| 100°C; 1 mois | 0,05 | 0,03 |

## Revendications

1. Prémélanges destinés à la préparation de mousses de polyuréthane ou de polyisocyanurate, comprenant au moins un polyol; au moins un hydrofluoroalcane répondant à la formule générale CF₃-CR¹R²-CF₂-R³ où R¹ et R² représentent, indépendamment l'un de l'autre, un atome d'hydrogène ou un groupement alkyle en C1-C3, éventuellement fluoré, et où R³ représente un atome d'hydrogène ou un groupement méthyle; et au moins un stabilisant choisi parmi les nitroalcanes, les dicétones, les sels de métaux alcalino-terreux et les composés bromés.

2. Prémélanges selon la revendication 1, dans lesquels l'agent gonflant est le 1,1,1,3,3-pentafluoropropane.

3. Prémélanges selon la revendication 1, dans lesquels l'agent gonflant est le 1,1,1,3,3-pentafluorobutane.

4. Prémélanges selon l'une quelconque des revendications 1 à 3, dans lesquels le stabilisant comprend un nitroalcane en C1-C6.

5. Prémélanges selon l'une quelconque des revendications 1 à 3, dans lesquels le stabilisant comprend une dicétone choisie parmi les dicétones aliphatiques en C5-C10 et les benzoquinones, éventuellement substituées par au moins un groupe alkyle en C1-C10.

6. Prémélanges selon l'une quelconque des revendications 1 à 3, dans lesquels le stabilisant comprend un sel de métal alcalino-terreux choisi parmi les halogénures et les nitrates.

7. Prémélanges selon l'une quelconque des revendications 1 à 3, dans lesquels le stabilisant comprend un composé bromé choisi parmi les bromoalcanes et les bromoalcools.

8. Prémélanges selon l'une quelconque des revendications 1 à 7, adaptés à la fabrication de mousses rigides de polyisocyanurate.

9. Procédé de fabrication de mousses de polyuréthane ou de polyisocyanurate dans lequel on fait réagir au moins un isocyanate avec au moins un polyol en présence d'une part, d'au moins un hydrofluoroalcane répondant à la formule générale
CF₃-CR¹R²-CF₂-R³
où R¹ et R² représentent, indépendamment l'un de l'autre, un atome d'hydrogène ou un groupement alkyle en C1-C3, éventuellement fluoré, et où R³ représente un atome d'hydrogène ou un groupement méthyle et, d'autre part, d'au moins un stabilisant choisi parmi les nitroalcanes, les dicétones, les sels de métaux alcalino-terreux et les composés bromés.

10. Mousses de polyuréthane ou de polyisocyanurate obtenues par mise en oeuvre d'un prémélange conforme à l'une quelconque des revendications 1 à 8 ou du procédé de la revendication 9.

## Claims

1. Premixes intended for the preparation of polyurethane or polyisocyanurate foams comprising at least one polyol, at least one hydrofluoroalkane corresponding to the general formula CF₃-CR¹R²-CF₂-R³, where R¹ and R² represent, independently of one another, a hydrogen atom or an optionally fluorinated C₁-C₃ alkyl group and where R³ represents a hydrogen atom or a methyl group, and at least one stabilizer chosen from nitroalkanes, diketones, alkaline-earth metal salts and brominated compounds.

2. Premixes according to Claim 1, in which the blowing agent is 1,1,1,3,3-pentafluoropropane.

3. Premixes according to Claim 1, in which the blowing agent is 1,1,1,3,3-pentafluorobutane.

4. Premixes according to any one of Claims 1 to 3, in which the stabilizer comprises a C₁-C₆ nitroalkane.

5. Premixes according to any one of Claims 1 to 3, in which the stabilizer comprises a diketone chosen from C₅-C₁₀ aliphatic diketones and benzoquinones, optionally substituted by at least one C₁-C₁₀ alkyl group.

6. Premixes according to any one of Claims 1 to 3, in which the stabilizer comprises an alkaline-earth metal salt chosen from halides and nitrates.

7. Premixes according to any one of Claims 1 to 3, in which the stabilizer comprises a brominated compound chosen from bromoalkanes and bromoalcohols.

8. Premixes according to any one of Claims 1 to 7, suited to the manufacture of rigid polyisocyanurate foams.

9. Process for the manufacture of polyurethane or polyisocyanurate foams, in which at least one isocyanate is reacted with at least one polyol in the presence, on the one hand, of at least one hydrofluoroalkane corresponding to the general formula
CF₃-CR¹R²-CF₂-R³
where R¹ and R² represent, independently of one another, a hydrogen atom or an optionally fluorinated C₁-C₃ alkyl group and where R³ represents a hydrogen atom or a methyl group, and, on the other hand, of at least one stabilizer chosen from nitroalkanes, diketones, alkaline-earth metal salts and brominated compounds.

10. Polyurethane or polyisocyanurate foams obtained by use of a premix in accordance with any one of Claims 1 to 8 or of the process of Claim 9.

## Patentansprüche

1. Vorgemische für die Herstellung von Polyurethan- oder Polyisocyanuratschaumstoffen, die wenigstens ein Polyol; wenigstens ein Hydrofluoralkan entsprechend der allgemeinen Formel CF₃-CR¹R²-CF₂-R³, worin R¹ und R² unabhängig voneinander ein Wasserstoffatom oder eine gegebenenfalls fluorierte C₁-C₃-Alkylgruppe darstellen und R³ für ein Wasserstoffatom oder eine Methylgruppe steht; und wenigstens einen unter Nitroalkanen, Diketonen, Erdalkalimetallsalzen und bromierten Verbindungen ausgewählten Stabilisator umfassen.

2. Vorgemische nach Anspruch 1, worin das Treibmittel 1,1,1,3,3-Pentafluorpropan ist.

3. Vorgemische nach Anspruch 1, worin das Treibmittel 1,1,1,3,3-Pentafluorbutan ist.

4. Vorgemische nach einem der Ansprüche 1 bis 3, worin der Stabilisator ein C₁-C₆-Nitroalkan umfaßt.

5. Vorgemische nach einem der Ansprüche 1 bis 3, worin der Stabilisator ein unter C₅-C₁₀-aliphatischen Diketonen und gegebenenfalls durch wenigstens eine C₁-C₁₀-Alkylgruppe substituierten Benzochinonen ausgewähltes Diketon umfaßt.

6. Vorgemische nach einem der Ansprüche 1 bis 3, worin der Stabilisator ein unter Halogeniden und Nitraten ausgewähltes Erdalkalimetallsalz umfaßt.

7. Vorgemische nach einem der Ansprüche 1 bis 3, worin der Stabilisator eine unter Bromalkanen und Bromalkoholen ausgewählte bromierte Verbindung umfaßt.

8. Vorgemische nach einem der Ansprüche 1 bis 7, die zur Herstellung von starren Polyisocyanuratschaumstoffen geeignet sind.

9. Verfahren zur Herstellung von Polyurethan- oder Polyisocyanuratschaumstoffen, worin wenigstens ein Isocyanat mit wenigstens einem Polyol in Gegenwart von einerseits wenigstens einem Hydrofluoralkan entsprechend der allgemeinen Formel
CF₃-CR¹R²-CF₂-R³,
worin R¹ und R², unabhängig voneinander, ein Wasserstoffatom oder eine gegebenenfalls fluorierte C₁-C₃-Alkylgruppe darstellen und R³ für ein Wasserstoffatom oder eine Methylgruppe steht, und anderseits wenigstens einem unter Nitroalkanen, Diketonen, Erdalkalimetallsalzen und bromierten Verbindungen ausgewählten Stabilisator umgesetzt wird.

10. Polyurethan- oder Polyisocyanuratschaumstoffe, erhalten durch Einsatz eines Vorgemisches nach einem der Ansprüche 1 bis 8 oder nach dem Verfahren von Anspruch 9.
